# FASCICULE DE BREVET EUROPEEN

(11) **EP 0 479 678 B1**
(45) Date de publication et mention de la délivrance du brevet: **18.12.1996**
(21) Numéro de dépôt: 91402634.9
(22) Date de dépôt: 03.10.1991
(51) Int. Cl.: C03C 17/00, C03C 17/10, C03C 17/25, C23C 4/12

(54) **Procédé de revêtement de vitrages par un procédé de projection thermique**
Verfahren zur Beschichtung von Verglasungen durch ein Verfahren zur thermischen Spritzung
Coating process for glazing by a thermal spraying process

(30) Priorité: 05.10.1990 DE 4031489
(43) Date de publication de la demande: 08.04.1992
(73) Titulaire: SAINT-GOBAIN VITRAGE, F-92400 Courbevoie (FR); VEGLA Vereinigte Glaswerke GmbH, D-52066 Aachen (DE)
(72) Inventeur: Blank, Kurt, Dr., W-5100 Aachen (DE); Decker, M. Jens, W-5340 Bad Honnef (DE); Gebhardt, Franz, Prof. Dr., W-5102 Würselen (DE); Janes, Sigmar, Dr., W-5300 Bonn 1 (DE); Schäfer, Wolfgang, Dr., W-5100 Aachen (DE)
(74) Mandataire: Muller, René

(56) Documents cités:
- EP-A- 0 263 469
- DE-B- 2 615 022
- PATENT ABSTRACTS OF JAPAN vol. 12, no. 496 (C-555)(3343) 23 Décembre 1988 & JP-A- 63 206 459 ( SHOWA DENKO K.K. ) 25 Août 1988

## Description

La présente invention concerne un procédé de revêtement de vitrages en verre au silicate par des métaux, des oxydes métalliques ou d'autres matières céramiques à point de fusion élevé à l'aide d'un procédé de projection thermique comme le procédé de projection à la flamme ou le procédé de projection au plasma.

L'emploi du procédé de projection à la flamme et du procédé de projection au plasma pour revêtir des vitrages au silicate par des métaux, des oxydes métalliques ou d'autres matières céramiques à haut point de fusion est connu ("Plasmaspritzen auf Glas", Voir Silikattechnik 1981, pages 310/311). Pour le revêtement par des oxydes à haut point de fusion et d'autres matières céramiques à haut point de fusion, en règle générale, on préfère le procédé de projection par poudrage, dans lequel la poudre à pulvériser est insufflée dans le courant de gaz chaud ou, selon le cas, dans la flamme et est entraînée et fondue par ce courant.

On sait que, lors du traitement du verre par des chalumeaux de projection à flamme ou à plasma, du fait de la dilatation thermique qui se produit à la surface du verre, des tensions de compression apparaissent. Ces tensions de compression entraînent d'une part l'apparition de tensions de traction correspondantes dans les régions du vitrage qui restent plus froides, lesquelles tensions peuvent entraîner une rupture des vitrages. Par ailleurs, des tensions de traction peuvent également apparaître dans les régions chauffées du vitrage, lorsque le réchauffement du verre est si fort que ce dernier se ramollit si bien que les tensions de compression sont éliminées par la déformation plastique du verre. Dans ce cas, les tensions de traction apparaissent lors du refroidissement ultérieur du verre.

Pour éviter l'apparition des tensions de traction dangereuses et donc la rupture du vitrage, on sait que l'on peut réchauffer les vitrages avant la projection du revêtement de manière uniforme, jusqu'au-dessus de la température de détente, de telle sorte que les tensions induites par le réchauffement intensif lors de l'induction puissent être éliminées. Ce réchauffement du vitrage qui se se produit avant le processus de revêtement représente un stade de travail supplémentaire, qui est, en outre, synonyme de frais d'énergie considérables.

On connait du document EP-A-0 263 469 un procédé d'aplication thermique d'un revêtement sur des surfaces de pièces à usiner à l'aide d'un jet de gaz chaud et d'un matériau liquéfié avec refroidissement simultané des surfaces par un jet de refroidissement renfermant du dioxyde de carbone dans lequel on a ajouté un autre fluide présentant une masse molaire inférieure à celle du dioxyde de carbone. Les pièces traitées peuvent être en métal, en céramique ou en verre. Ce document ne décrit pas le revêtement d'un vitrage en verre plat. Il n'aborde pas le problème des tensions de membrane.

On connait encore du document DE-B-3 615 022 le revêtement d'une tôle d'acier dans lequel on refroidit la zone entourant la zone traitée en vue d'éviter l'oxydation de cette tôle. Ce document n'aborde pas le problème des tensions de membrane susceptibles d'affecter un vitrage.

La présente invention a pour but d'aménager un procédé de projection thermique utilisant un refroidissement simultané pour le revêtement d'un vitrage de telle sorte qu'il puisse être réalisé avec une plus grande économie sans faire apparaître de tensions de traction dangereuses qui pourraient se traduire par la rupture du vitrage.

Selon la présente invention, on atteint ce but en refroidissant le vitrage, au cours du processus de projection, dans la région attaquée par le courant de flammes ou de gaz chaud.

Le système de refroidissement produit selon l'invention un coefficient de transmission de chaleur au moins 10 fois plus grand que le coefficients de chaleur moyens produits par le courant de flammes ou le courant de gaz chaud.

En principe, il est possible de refroidir intensivement le vitrage au cours du processus de revêtement dans la zone qui est en regard de la surface à revêtir. De préférence, cependant, on refroidira la surface à revêtir elle-même en dirigeant, au voisinage direct du courant de gaz chaud chargé de matière de revêtement, un ou plusieurs courants de gaz froid intensifs sur la surface du verre.

Au plan du pouvoir adhésif de la matière projetée sur la surface de verre, plusieurs facteurs jouent de manière connue un rôle déterminant, notamment des facteurs physiques comme l'ancrage superficiel mécanique du verre et de la matière projetée, ainsi que des réactions chimiques à l'interface. L'ancrage mécanique tout comme les réactions chimiques aux interfaces sont considérablement favorisés par les hautes températures. On a cependant constaté que le refroidissement de la surface de verre selon l'invention au voisinage direct de la région superficielle sollicitée par le courant de flammes ou, selon le cas, de gaz, ou le refroidissement de la face arrière du vitrage ne compromet pas sensiblement l'adhérence des couches projetées. En dépit du refroidissement intensif, le réchauffement superficiel du verre suffit au contraire pour assurer un bon pouvoir adhésif de la matière projetée. La conductibilité thermique relativement faible du verre contribue de manière décisive à cet effet avantageux. Il est à supposer que les particules pulvérulentes fondues incidentes réchauffent la surface de verre ponctuellement et brièvement en passant par la température de ramollissement et se lient à cette surface bien que la température moyenne de la surface de verre sollicitée reste sensiblement plus basse et soit encore abaissée par le refroidissement. De manière surprenante, on empêche donc, grâce au refroidissement, l'apparition de tensions dangereuses dans le verre et simultanément, malgré le refroidissement, on obtient une bonne liaison de la matière projetée avec la surface du verre.

La présente invention part en outre du principe que, au cours du processus de revêtement de vitrages selon l'invention, le profil de tensions qui se forme sur l'épaisseur du vitrage est peu susceptible de mener à la rupture du vitrage. En revanche, les tensions de traction dites de membrane sont plus dangereuses. Les tensions de membrane agissent uniformément sur toute l'épaisseur du vitrage dans la direction du plan du vitrage; elles sont occasionnées par le fait que, au cours du processus de revêtement, la température moyenne sur toute l'épaisseur du vitrage subit des modifications locales. Les tensions de compression de membrane apparaissent dans les régions revêtues plus chaudes du vitrage; elles occasionnent des tensions de traction de membrane compensatoires dans les régions plus froides, qui dépendent fortement de la géométrie des zones revêtues et non revêtues et, comme mentionné ci-dessus, atteignent des valeurs qui dépassent largement la résistance à la traction du verre. Grâce au refroidissement selon l'invention des surfaces de verre au recto ou au verso, ces tensions de traction de membrane dangereuses dans les régions non revêtues sont évitées ou maintenues à un niveau suffisamment bas pour que soit largement évitée la production des tensions de compression de membrane suscitées par la dilatation thermique, qui font naître ces tensions de traction de membrane compensatoires.

On réalise le procédé selon l'invention de manière appropriée en adjoignant au chalumeau de projection une tuyère de gaz froid, qui agit sur la région superficielle immédiatement voisine de la région attaquée par le courant de flammes ou de gaz. Ces tuyères de gaz froid sont en partique d'une conformation telle, débouchent à une telle distance de la surface du verre et sont alimentées de gaz froid d'une manière telle qu'elles produisent chaque fois des coefficients de transmission de chaleur moyens qui sont au moins dix fois plus grands que les coefficients de transmission de chaleur moyens produits par le courant de flammes ou, selon le cas, de gaz chaud.

Une autre forme de réalisation du procédé selon l'invention consiste à refroidir, à partir du verso non revêtu, soit le vitrage entier, soit, de manière appropriée, uniquement les régions superficielles à revêtir. Cela s'effectue de manière appropriée par un montage de tuyère fixe à l'aide duquel le verso du vitrage est sollicité dans les régions superficielles correspondantes par de l'air froid à température ambiante. Le système de refroidissement doit produire, au cours du processus de revêtement, un coefficient de transmission de chaleur qui soit au moins dix fois plus grand que les coefficients de transmission de chaleur moyens produits par le courant de flammes ou le courant de gaz chaud.

Ci-dessous, quelques formes de réalisation d'une structure d'un appareil convenant pour la réalisation du procédé et pour le revêtement de vitrages par diverses matières à haut point de fusion, seront décrites plus en détail en se référant aux dessins ci-annexés dans lesquels :
la Fig. 1 représente un chalumeau de projection à flamme comportant une garniture tubulaire à double paroi pour la protection du courant de flammes et le refroidissement de la surface du substrat, et
la Fig. 2 est un chalumeau de projection à flamme comportant une garniture de refroidissement dotée de tuyères tubulaires.

Dans le cas du chalumeau de projection à flamme 1 représenté dans les dessins, il s'agit d'un chalumeau de projection à flamme approprié pour poudrage à la flamme de structure usuelle comprenant un tube d'alimentation 2 pour le gaz de combustion, par exemple de l'acétylène, un tube d'alimentation 3 pour l'air de combustion, ou, selon le cas, l'oxygène et une conduite d'alimentation 4 pour la poudre qui constitue la matière de revêtement.

En principe, le chalumeau de projection peut cependant être constitué d'un chalumeau de projection à plasma dans lequel, entre une tige de tungstène jouant le rôle de cathode et une anode annulaire refroidie à l'eau et conformée en tuyère, il se forme un arc qui ionise un courant de gaz. Ce courant de gaz ionisé réchauffe la poudre céramique, qui est entraînée par un second courant de gaz dans la flamme.

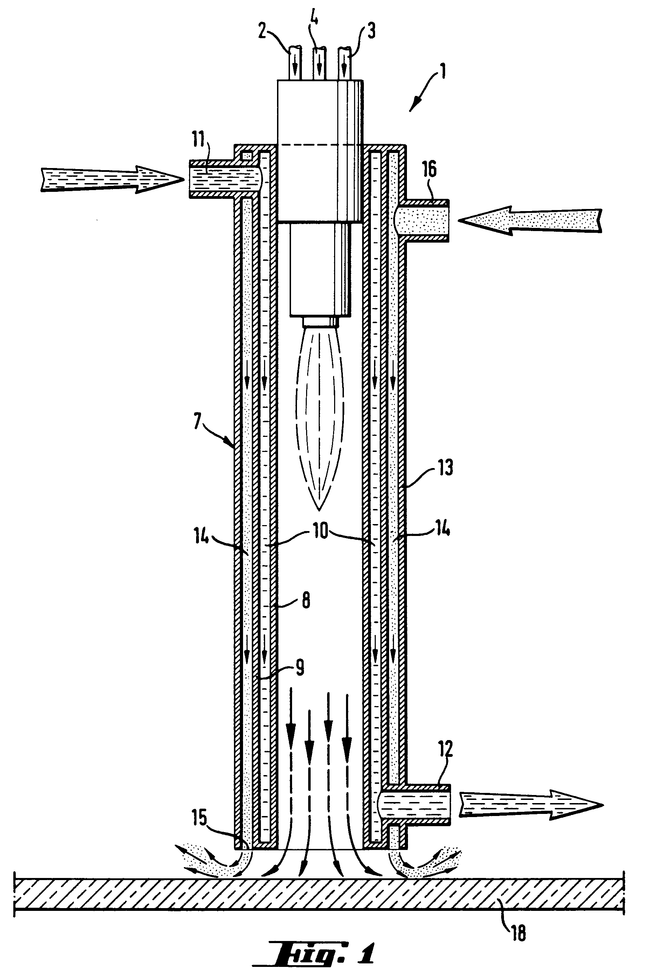

Dans la forme de réalisation représentée sur la Fig. 1, on a fixé sur la tête du chalumeau de projection 1 coaxialement à la tuyère de celui-ci, un tube de protection à parois multiples 7, qui entoure le courant de flammes ou de gaz chaud. Le tube de protection 7 comprend un espace fermé cylindrique creux intérieur 10 formé par les deux sections tubulaires 8 et 9 agencées concentriquement, lequel espace 10 est parcouru par de l'eau froide. L'eau de refroidissement est acheminée par la tubulure de raccordement 11 dans l'espace creux 10 et est évacuée par la tubulure de raccordement 12. Le refroidissemment à l'eau empêche un trop fort échauffement du tube de protection. Grâce au tube de protection fermé, le courant de flammes est protégé vis-à-vis de l'air environnant. De cette manière, dans le cas de matières à très haut point de fusion, le processus de fusion de la poudre est amélioré. En outre, le courant de flammes ou, selon le cas, le courant de gaz, est protégé vis-à-vis de l'entrée d'oxygène de l'air de telle sorte que, grâce à cet appareil, les matières puissent être atomisées dans une atmosphère réductrice, ce qui est nécessaire par exemple lors de la projection de métaux.

Il est prévu, concentriquement aux deux sections tubulaires 8 et 9, une autre section tubulaire 13 qui forme, avec la section tubulaire 9, un autre espace intermédiaire cylindrique creux 14. A son extrémité avant, l'espace intermédiaire 14 est ouvert et forme ainsi une tuyère à fente annulaire 15. Dans l'espace intermédiaire 14, de l'air de refroidissement à température ambiante est acheminé sous pression via la conduite d'alimentation 16. Dans le cas où la matière projetée doit l'être en l'absence d'oxygène, au lieu de l'air froid, on acheminera dans l'espace intermédiaire 14, via la conduite d'alimentation 16, de l'azote ou un autre gaz inerte sous pression. L'air froid ou le gaz froid s'échappe par la tuyère annulaire 15 et exerce, en rencontrant la surface du vitrage 18, un important effet de refroidissement sur celle-ci.

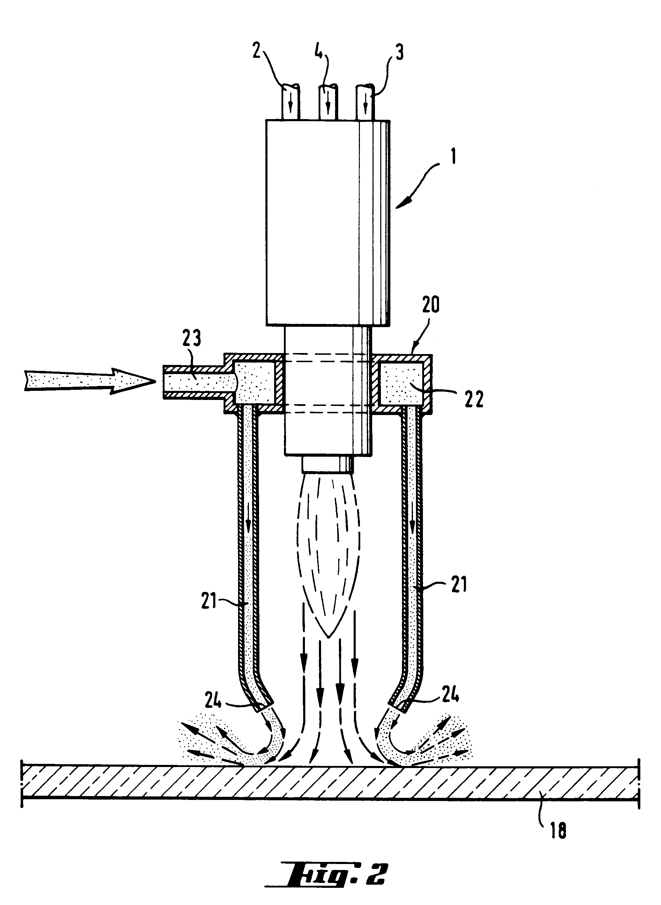

Sur la Fig. 2 est représentée une autre forme de réalisation d'un chalumeau de projection à flammes 1 doté d'une garniture de refroidissement, lequel chalumeau est à nouveau un chalumeau de poudrage à flammes avec une conduite d'alimentation 2 pour le gaz de combustion, une conduite d'alimentation 3 pour l'oxygène ou l'air de combustion et une conduite d'alimentation 4 pour la poudre de revêtement. Dans ce cas, on a installé sur le corps du chalumeau de projection 1 une couronne 20 à laquelle sont raccordées deux tuyères tubulaires 21. Les tuyères tubulaires 21 ont, par exemple, une longueur de 25 cm et un diamètre interne de 4 à 6 mm. La couronne 20 présente un espace creux 22 en forme de canal annulaire, dans lequel de l'air de refroidissement est admis via la tubulure 23. Cet espace creux en forme de canal annulaire 22 permet de mettre en liaison les tuyères tubulaires 21 de telle sorte que l'air de refroidissement, qui est admis sous pression dans le canal annulaire, s'échappe des orifices 24 des tuyères et s'écoule sur la surface du vitrage 18. Cette forme de réalisation convient tout particulièrement pour la projection de matières dans une atmosphère oxydante dans le cas où ces matières ne présentent pas une température de fusion très élevée.

On trouvera ci-dessous quelques exemples de revêtement de vitrages flottés de 2 à 5 mm d'épaisseur par diverses substances à haut point de fusion.

### Exemple 1.-

Un vitrage est revêtu de titanate d'aluminium (Al₂TiO₅), dont la température de fusion se situe à environ 1860°C. A cet effet, on utilise un chalumeau de projection à flamme du commerce, qui est doté de la garniture de refroidissement représentée sur la Fig. 2. Comme gaz de combustion, on utilise de l'acétylène et de l'oxygène. Le chalumeau de projection est alimenté de poudre de titanate d'aluminium d'un calibre granulométrique de 10 à 40 µm, en quantité de 20 à 30 g/min, dans un courant de gaz véhiculaire. La garniture de refroidissement est raccordée à une conduite d'air sous pression par laquelle de l'air de refroidissement est acheminé dans la garniture de refroidissement sous une pression d'environ 6 bars. La distance entre les tuyères de projection et la surface du verre lors de la projection est de l'ordre de 30 cm, les tuyères de refroidissement elle-mêmes étant à une distance d'environ 2 cm de la surface du verre. Le diamètre du courant de flammes au point d'impact avec le vitrage atteint environ 40 mm et la température du gaz enflammé au point d'impact avec le vitrage atteint environ 780°C. L'appareil peut être déplacé d'un côté à l'autre de la surface du verre de manière répétée à une vitesse d'environ 60 m/min.

### Exemple 2.-

Un vitrage est doté d'une couche superficielle brun-noir de basalte, dont la température de fusion est d'environ 1500°C. On utilise en l'occurrence de la poudre de basalte ayant une granulométrie moyenne comprise entre 5 et 20 µm, qui est acheminée à l'aide d'un convoyeur de poudre du commerce dans un courant de gaz véhiculaire, en quantité de 20 à 30 g/min, au chalumeau de projection à flamme. On utilise à nouveau un chalumeau de projection à flamme du commerce avec la garniture de refroidissement représentée sur la Fig. 2. Le chalumeau de projection à flamme est mis en oeuvre avec de l'acétylène et de l'air dans le cadre d'un acheminement neutre des flammes. Comme gaz de refroidissement, on utilisera à nouveau de l'air comprimé sous une pression d'environ 6 bars. La température du courant de flammes atteinte directement au point d'impact avec le vitrage est d'environ 780°C et le diamètre du courant de flammes est d'environ 40 mm à une distance de la tuyère de projection d'environ 22 cm. L'appareil de projection est déplacé sur la surface de verre à revêtir à une vitesse d'environ 60 m/min, de manière répétée.

### Exemple 3.-

Un vitrage doit être revêtu d'une couche d'aluminium métallique. Pour cela, on utilise de la poudre métallique d'aluminium d'une granulométrie de 80 à 120 µm. La projection se fait en atmosphère réduite. A cet effet, on utilise le dispositif de projection à flamme représenté sur la Fig. 1, de l'azote sous une pression de 5 bars étant acheminé à titre de gaz de refroidissement dans le tube de protection. La poudre d'aluminium est à nouveau admise en quantité de 20 à 30 g/min dans le chalumeau de projection à flamme, qui est activé par de l'acétylène et de l'air comme gaz de combustion. La distance du tube de protection et donc de la tuyère d'échappement annulaire pour le gaz de refroidissement est d'environ 2 à 3 cm au cours du processus de projection. Le chalumeau de projection muni du tube de protection est déplacé d'un côté à l'autre de la surface du vitrage à revêtir à une vitesse relative vis-à-vis de la surface du verre d'environ 60 m/min, de manière répétée. La température du courant de flammes ou du courant du gaz enflammé atteint à l'impact avec la surface de verre environ 900°C.

Dans les trois exemples de réalisation, le verre était attaqué en chaque point de la surface à traiter, au cours d'un processus de projection à flamme, pendant 0,035 seconde, directement par le courant de flammes. Entre deux opérations de traitement à la flamme successives, on respectait une pause d'environ 0,46 seconde.

## Revendications

1. Procédé de revêtement d'un vitrage en verre au silicate par des oxydes métalliques ou d'autres matières céramiques à haut point de fusion à l'aide d'un procédé de projection à la flamme ou le procédé de projet au plasma, caractérisé en ce qu'on refroidit le vitrage au cours du processus de projection dans la région de la surface attaquée par le courant de flammes ou, selon le cas, par le courant de gaz chaud, le système de refroidissement produisant un coefficient de transmission de chaleur au moins 10 fois plus grand que les coefficients de transmission de chaleur moyens produits par le courant de flammes ou le courant de gaz chaud.

2. Procédé selon la revendication 1, caractérisé en ce qu'on refroidit le vitrage dans la zone qui est en regard de la surface attaquée par le courant de flammes ou le courant de gaz chaud.

3. Procédé selon la revendication 1, caractérisé en ce qu'on refroidit le vitrage sur la surface attaquée par le courant de flammes ou de gaz chaud immédiatement à côté de la région superficielle attaquée par le courant de flammes ou le courant de gaz chaud.

4. Procédé selon l'une quelconque des revendications 1 à 3, caractérisé en ce que le refroidissement du vitrage est assuré par un ou plusieurs courants de gaz froid, en particulier des courants d'air froid.

5. Procédé selon la revendication 3 ou 4, caractérisé en ce qu'on adjoint, au chalumeau de projection, une ou plusieurs tuyères alimentées d'air froid ou de gaz froid.

## Claims

1. Process for coating a pane of silicate glass with metallic oxides or other ceramic materials having a high melting point by a flame projection process or the plasma projection process, characterized in that the pane is cooled during the projection process in the region of the surface attacked by the stream of flames or, where applicable, by the hot gas stream, the cooling system producing a heat transfer coefficient at least 10 times greater than the mean heat transfer coefficients produced by the stream of flames or the hot gas stream.

2. Process according to Claim 1, characterized in that the pane is cooled in the zone which is opposite the surface attacked by the stream of flames or the hot gas stream.

3. Process according to Claim 1, characterized in that the pane is cooled on the surface attacked by the stream of flames or the hot gas stream immediately adjoining the surface area attacked by the stream of flames or the hot gas stream.

4. Process according to any one of Claims 1 to 3, characterized in that the cooling of the pane is assured by one or more streams of cold gas, especially streams of cold air.

5. Process according to Claim 3 or 4, characterized in that one or more pipes supplied with cold air or cold gas are associated with the projection torch.

## Patentansprüche

1. Verfahren zum Beschichten einer Silikatglasscheibe mit Metalloxiden oder anderen hochschmelzenden keramischen Materialien mit Hilfe eines Flammspritzverfahrens oder eines Plasmaspritzverfahrens, **dadurch gekennzeichnet**, daß die Glasscheibe während des Spritzvorgangs in dem vom Flammenstrahl oder ggf. von dem Heißgasstrahl beaufschlagten Bereich der Oberfläche gekühlt wird, wobei das Kühlsystem eine wenigstens 10-fach höhere Wärmeübergangszahl erzeugt als die mittleren durch den Flammenstrahl bzw. Heißgasstrahl erzeugten Wärmeübergangszahlen.

2. Verfahren nach Anspruch 1, dadurch gekennzeichnet, daß die Glasscheibe in dem Bereich, der der von dem Flammen- bzw. Heißgasstrahl beaufschlagten Oberfläche gegenüberliegt, gekühlt wird.

3. Verfahren nach Anspruch 1, dadurch gekennzeichnet, daß die Glasscheibe auf der von dem Flammen- bzw. Heißgasstrahl beaufschlagten Oberfläche unittelbar neben der von dem Flammen- bzw. Heißgasstrahl beaufschlagten Flächenbereich gekühlt wird.

4. Verfahren nach einem der Ansprüche 1 bis 3, dadurch gekennzeichnet, daß die Kühlung der Glasscheibe durch einen oder mehrere Kühlgasströme, insbesondere Kühlluftströme, sichergestellt wird.

5. Verfahren nach Anspruch 3 oder 4, dadurch gekennzeichnet, daß der zusammen mit der Spritzpistole eine oder mehrere mit Kühlluft oder Kühlgas beaufschlagte Blasdüsen mitgeführt werden.
